# EUROPÄISCHE PATENTSCHRIFT

(11) **EP 0 688 683 B1**
(45) Veröffentlichungstag und Bekanntmachung des Hinweises auf die Patenterteilung: **15.10.1997**
(21) Anmeldenummer: 95109393.9
(22) Anmeldetag: 17.06.1995
(51) Int. Cl.: B60B 5/02

(54) **Antreibbares Plastikrad**
Plastic drive wheel
Roue motrice en plastique

(30) Priorität: 24.06.1994 US 265304
(43) Veröffentlichungstag der Anmeldung: 27.12.1995
(73) Patentinhaber: DEERE & COMPANY, Moline, Illinois 61265 (US)
(72) Erfinder: Hardesty, Terry Dean, Columbus, Wisconsin 53925 (US); Seegert, Brian David, Hartford, Wisconsin 53927 (US); Patterson, Jon Michael, Mokena, Illinois 60448 (US)
(74) Vertreter: Feldmann, Bernhard

(56) Entgegenhaltungen:
- FR-A- 2 381 637
- US-A- 4 330 914
- US-A- 4 896 899
- US-A- 4 995 675
- US-A- 5 116 106
- US-A- 5 133 591

## Beschreibung

Die Erfindung bezieht sich auf ein antreibbares Plastikrad mit radial angeordneten Verbindungsgliedern zwischen einem Nabenteil und einem Felgenteil.

Bei handgeführten Rasenmähern ist es seit langem bekannt, die Laufräder aus Kunststoff herzustellen. Kunststoffräder sind in der Herstellung nicht kostenaufwendig und zeichnen sich durch ein geringes Gewicht aus. Bei derartigen Rasenmähern können die Laufräder in Einzelfällen auch antreibbar sein, was in der Regel keine Schwierigkeiten bereitet, da das Antriebsmoment gering ist. Solche antreibbare Laufräder sind dann mit einer Radnabe verschraubt. Eine andere bekanntgewordene Lösung sieht vor, daß das Ende der Antriebsachse mit einem Ritzel versehen ist, das mit einem am Laufrad vorgesehenen Ringrad kämmt. Laufräder an handgeführten Rasenmähern sind natürlich relativ klein und können nicht einfach vergrößert werden, um bei selbstfahrenden Maschinen mit aufsitzendem Fahrer eingesetzt werden zu können.

Das Plastikrad, von dem die Erfindung ausgeht (US-A-5 116 106), findet bei einem selbstfahrenden Sitzrasenmäher mit Heckmotor Verwendung und ist so gestaltet, daß es Radgewichte aufnehmen kann. In dem Dokument US-A-5 116 106, daß ebenfalls auf die Anmelderin zurückgeht, finden sich keine Angaben, wie das Antriebsmoment in das Rad übertragen wird.

Andererseits ist bereits ein Verfahren vorgeschlagen worden (US-A-4 330 914), wie ein aus Kunststoff gegossenes Rad für ein Fahrrad mit einer Freilaufbremse zu versehen ist. Eine aus Aluminium bestehende Hülse oder ein entsprechender Einsatz ist an seiner Peripherie mit einer Reihe von Ringnuten versehen, die beim Gießen des Rades mit Kunststoff gefüllt werden, und soll verhindern, daß bei einem Einpreßen der Freilaufbremse eine Beschädigung des Kunststoffes auftritt.

Die der Erfindung zugrundeliegende Aufgabe wird in einem relativ kostengünstig herzustellenden Rad aus Kunststoff gesehen, das zuverlässig einsetzbar ist und Biegekräfte auffangen oder reduzieren kann, die bei den höheren, bei schwereren Fahrzeugen auftretenden Momenten zu erwarten sind. Dem entsprechend sieht die Erfindung einen in dem Nabenteil aufgenommenen Treibeinsatz mit einer Öffnung zur endseitigen Aufnahme einer Antriebsachse und mit mindestens einem sich von dem Treibeinsatz nach außen in ein Verbindungsglied erstreckenden Mitnehmerteil vor, so daß auf Verschraubungen oder Zahnradantriebe verzichtet werden kann, wobei das Rad andererseits ausreichend stabil ist, um das größere Fahrzeuggewicht bei problemloser Übertragung der Antriebsmomente aufnehmen zu können.

Vorgeschlagen wird nach der Erfindung ferner, daß der Treibeinsatz mindestens drei auf seinem Umfang gleichmäßig verteilte Mitnehmerteile aufweist, wobei der oder die Mitnehmerteile im Bereich des innenliegenden Endes und/oder im Bereich des außenliegenden Endes des Treibeinsatzes sich radial erstreckend angeordnet ist bzw. sind.

Ist das Plastikrad noch mit an der Innenseite des Nabenteils vorgesehenen Verbindungsgliedern und mit an der Außenseite des Nabenteils vorgesehenen Verbindungsgliedern, die zueinander versetzt angeordnet sind, versehen, wodurch der zentrale Nabenteil gleichmäßig belastbar ist, so sieht die Erfindung außerdem vor, daß sich je ein Mitnehmerteil bis in den unteren Bereich der zugehörigen Verbindungsglieder erstreckt.

Die am äußeren Bereich vorgesehenen Mitnehmerteile können zudem nach außen abgewinkelt sein.

Eine besonders betriebssichere Lösung wird schließlich nach der Erfindung auch noch dadurch erzielt, daß der Treibeinsatz mit seinen Mitnehmerteilen aus einem metallischen Werkstoff besteht und beim Gießen des Plastikrades mit diesem verbunden wird. Hierdurch werden die Mitnehmerteile in dem Kunststoff eingebettet und stabilisieren die Verbindungsglieder ausreichend.

Eine drehfeste Verbindung wird dadurch erreicht, daß der Treibeinsatz einen Keil oder eine Nut aufweist und mit einer Nut oder einem Keil an der Antriebsachse in Eingriff bringbar ist. Durch die Nutlänge läßt sich außerdem das Rad in einer Richtung leicht festlegen, wobei zur unverschiebbaren Radanordnung noch an einer Radseite ein Sicherungsring vorgesehen werden kann.

Zweckmäßig kann der Treibeinsatz zweiteilig ausgebildet sein.

Eine stilistisch ansprechende und außerdem noch Stützkräfte aufnehmende Form läßt sich dadurch erreichen, daß die an der Außenseite vorgesehenen Verbindungsglieder im Bereich der Mitnehmerteile nach innen abgewinkelt sind und in diesem Bereich eine Schutzkappe aufnehmen, die Staub und Schmutz oder andere Fremdkörper von dem Treibeinsatz und der Antriebsachse fern hält.

In der Zeichnung ist ein nachfolgend näher erläutertes Ausführungsbeispiel der Erfindung dargestellt. Es zeigt:
- Fig. 1: ein Antriebsrad aus Plastik mit einem Reifen in perspektivischer Darstellung,
- Fig. 2: einen Schnitt durch den zentralen Nabenabschnitt des Plastikrades mit einem Treibeinsatz und dem Ende einer Antriebsachse sowie einer Schutzkappe,
- Fig. 3: den zweiteiligen Treibeinsatz nach Fig. 2 vor seinem Zusammenbau,
- Fig. 4: eine Ansicht in Blickrichtung der Pfeile 4 - 4 in Fig. 3,
- Fig. 5: eine Ansicht in Blickrichtung der Pfeile 5 - 5 in Fig. 3 und
- Fig. 6: einen modifizierten Treibeinsatz.

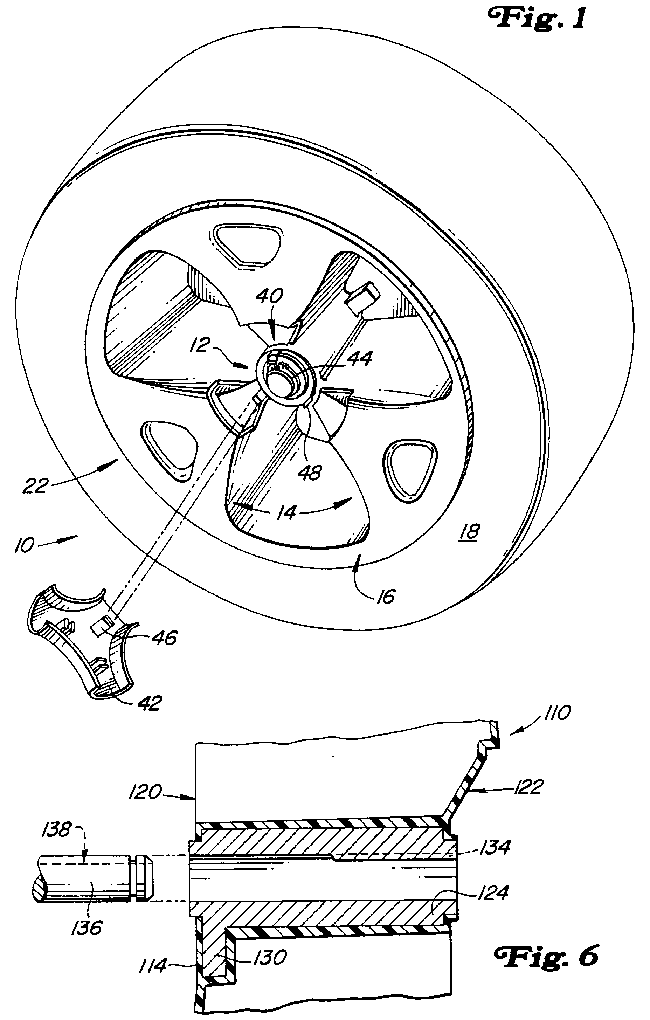

In Fig. 1 der Zeichnung ist ein aus Kunststoff hergestelltes Fahrzeugrad 10 zu erkennen. Derartige Räder werden bei Kleinschleppern für die Rasen- und Grundstückspflege eingesetzt. Sie zeichnen sich durch eine Leichtbauweise aus und sind so ausgebildet, daß sie ein von einem Motor kommendes Antriebsmoment auf den Boden übertragen können und gleichzeitig das Fahrzeuggewicht, auch bei einem aufsitzenden Fahrer, sicher auf den Boden übertragen. Ein zentraler Nabenabteil ist mit 12 und ein Felgenteil, auf dem der Reifen 18 montierbar ist, ist mit 16 bezeichnet. Zwischen dem Nabenteil 12 und dem Felgenteil 16 sind segmentartige Verbindungsglieder 14 oder Segmentspeichen vorgesehen. Bei dem bevorzugten Ausführungsbeispiel sind an der Innenseite 20 und an der Außenseite 22 des Rades 10 jeweils drei Verbindungsglieder 14 vorgesehen, die relativ dünnwandig ausgebildet und auf dem Umfang gleichmäßig verteilt sind. In Fig. 1 sind an jeder Seite drei Verbindungsglieder 14 oder Segmentspeichen zu erkennen. Ihr Zentriwinkel beträgt 60° und die Segmentspeichen an jeder Seite sind zueinander versetzt bzw. wechseln sich gegenseitig ab. Nabenteil 12, Felgenteil 16 und Verbindungsglieder 14 sind einteilig und werden in einem Spritzgußverfahren oder dgl. aus einem Kunststoff hergestellt.

Im Rahmen der Erfindung können die Speichensegmente auch anders angeordnet sein, d. h. eine alternierende Bauweise ist nicht erforderlich, doch wird eine solche bevorzugt für die Anordnung von Radgewichten. Gegebenenfalls können die Speichensegmente auch in der Radmitte verlaufen und aus dickerem Material bestehen, was jedoch den Gießprozeß erschwert.

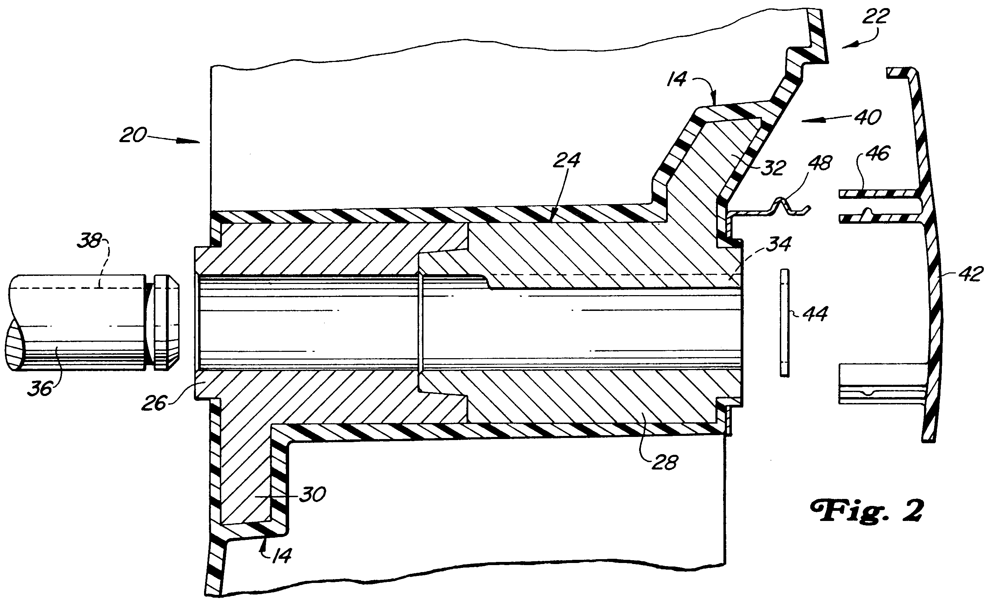

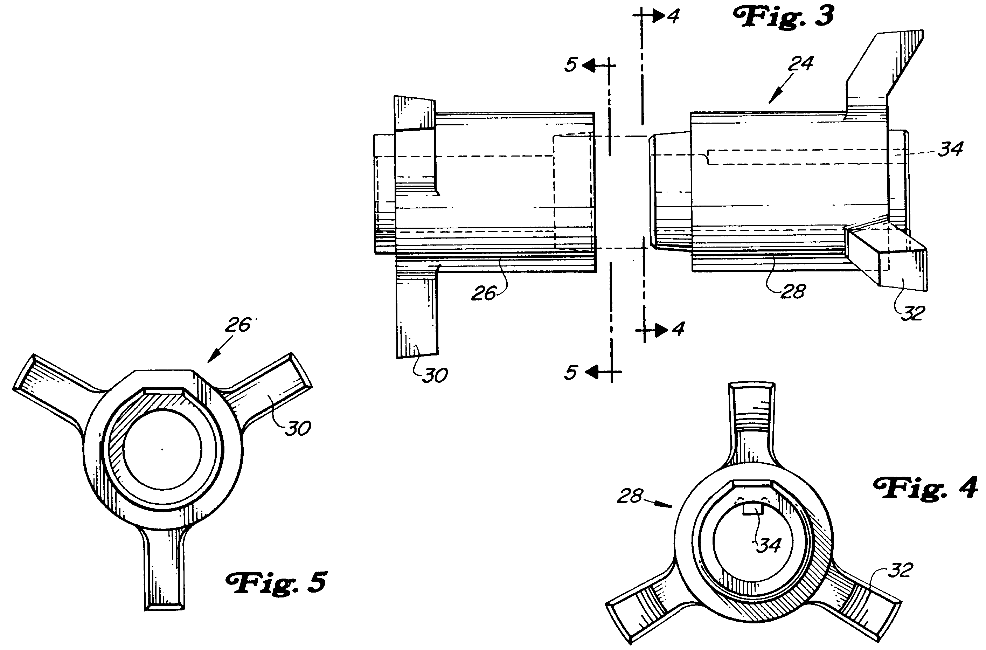

Jedes Kunststoffrad ist mit einem Treibeinsatz ausgestattet, der dazu beiträgt, das Antriebsmoment in einfacher Weise auf die Radfelge übertragen zu können. Beim bevorzugten Ausführungsbeispiel befindet sich der Treibeinsatz 24 in dem zentralen Nabenteil 12, ist zweiteilig ausgebildet und wird in dem Nabenteil 12 während des Gießvorganges verankert. Aus Fig. 2 ist zu erkennen, daß der Treibeinsatz 24 einen Innenteil 26 und einen Außenteil 28 aufweist, die in einem Sinterprozeß hergestellt werden. Bevor beide Teile in die Form eingelegt werden, werden sie miteinander verpreßt, um eine sichere Verbindung herstellen zu können. Insbesondere die Fig. 4 und 5 lassen erkennen, daß beide Teile 26 und 28 mit radial nach außen abstehenden Mitnehmerteilen 30 und 32 ausgestattet sind. Die Mitnehmerteile sind finger- oder zahnförmig ausgebildet und auf dem Umfang des Treibeinsatzes 24 an dem innenliegenden Ende und an dem außenliegenden Ende gleichmäßig verteilt. Bei drei Mitnehmerteilen beträgt damit der radiale Abstand 120°. Die Mitnehmerteile 30 und 32 an den beiden Enden des Treibeinsatzes sind zueinander versetzt, das heißt, sie wechseln sich gegenseitig ab und weisen bei axialer Betrachtung dann einen radialen Abstand von 60° auf, so daß alle 60° ein Mitnehmerteil 30 oder 32 von dem Treibeinsatz radial oder etwa radial nach außen absteht. Des weiteren geht aus der Zeichnung hervor, daß der Treibeinsatz 24 in seinem Inneren eine Axialbohrung zur Aufnahme des Endes einer Antriebsachse 36 aufweist. Damit Treibeinsatz 24 und Antriebsachse 36 in einfacher Weise miteinander drehfest verbindbar sind, weist die Axialbohrung in dem Treibeinsatz 24 noch einen Längskeil 34 auf, der in eine Nut 38 in dem Ende der Antriebsachse 36 eintreten kann.

Aus Fig. 2 ist nun zu erkennen, daß die drei sich an der Innenseite des Innenteils befindlichen Mitnehmerteile 30 sich relativ gerade nach außen erstrecken und nach dem Gießen des Kunststoffrades sich bis in die Verbindungsglieder 14 erstrecken, d. h. die Mitnehmerteile sind dann von dem Kunststoff ummantelt. Anders als an der Innenseite sind die drei Mitnehmerteile 32 an der Außenseite des Außenteils 28 leicht nach außen abgewinkelt, so daß sich hier, was auch in Fig. 1 zu erkennen ist, eine tassenförmige Einbuchtung 40 im Bereich des zentralen Nabenteils 12 ergibt. Auch diese Mitnehmerteile sind nach dem Gießen in den entsprechenden Verbindungsgliedern 14 eingebettet und von Kunststoff umgeben. Damit bilden auch die Verbindungsglieder an der Außenseite 22 eine tassenförmige Einbuchtung, die im Einsatz durch eine Schutzkappe 42 verschlossen wird, damit Fremdkörper, Staub und Schmutz nicht an die Antriebsachse 36 und an die entsprechenden Teile des Treibeinsatzes gelangen können.

Über einen Sicherungsring 44 an ihrem äußeren Ende wird die Antriebsachse 36 in dem Treibeinsatz 24 gesichert, wobei eine Verschiebung nach innen des Rades durch die Keil- und Nutverbindung 34, 38 verhindert wird. Auch die Schutzkappe 42 besteht aus Kunststoff und ist mit kleinen Fangtaschen 46 versehen, die jeweils auf einen Federklip 48 aufsteckbar sind, welche mit dem zentralen Nabenteil 12 durch einen Pressitz verbunden sind. Ein Kunststoff, der sich für die Herstellung des Rades 10 als geeignet erwiesen hat, ist HIMONT ASTRYN 75F4-2.

In Fig. 6 ist ein modifiziertes Antriebsrad 110 dargestellt. In dieser Schnittdarstellung sind die mit der Ausführung nach den Fig. 1 bis 5 vergleichbaren Teile mit um 100 erhöhten Bezugszeichen versehen. Der in Fig. 6 vorgesehene Treibeinsatz 124 ist einteilig ausgebildet und nur an seiner Innenseite 120 mit radial abstehenden und im wesentlichen geraden Mitnehmerteilen 130 versehen. An der Außenseite 122 sind keine Mitnehmerteile vorgesehen. Die drei Mitnehmerteile 130 an der Innenseite 120 weisen einen radialen Abstand von 120° auf. Auch diese Mitnehmerteile 130 sind nach dem Gießen des Rades 110 vollständig von einem Kunststoff umgeben.

Den vorstehenden Erläuterungen ist zu entnehmen, daß somit ein einfach herzustellendes und leichtes Antriebsrad aus Kunststoff geschaffen wurde, das auch bei schwereren Fahrzeugen, wie Kleinschleppern für die Garten- und Grundstückspflege oder Sitzrasenmähern mit Heckmotor zuverlässig eingesetzt werden kann. Die erforderliche Antriebskraft wird ohne Schwierigkeiten von der Antriebsachse in das Laufrad übertragen, ohne daß Schrauben oder Verschleiß anfällige Zahnräder erforderlich sind.

## Patentansprüche

1. Antreibbares Plastikrad (10, 110) mit radial angeordneten Verbindungsgliedern (14, 114) zwischen einem Nabenteil (12) und einem Felgenteil (16), gekennzeichnet durch einen in dem Nabenteil (12) aufgenommenen Treibeinsatz (24, 124) mit einer Öffnung zur endseitigen Aufnahme einer Antriebsachse (36, 136) und mit mindestens einem sich von dem Treibeinsatz (24, 124) nach außen in ein Verbindungsglied (14, 114) erstreckenden Mitnehmerteil (30, 32, 130).

2. Plastikrad nach Anspruch 1, dadurch gekennzeichnet, daß der Treibeinsatz (24, 124) mindestens drei auf seinem Umfang gleichmäßig verteilte Mitnehmerteile (30, 32, 130) aufweist.

3. Plastikrad nach Anspruch 1 oder 2, dadurch gekennzeichnet, daß der oder die Mitnehmerteile (30, 32, 130) im Bereich des innenliegenden Endes und/oder im Bereich des außen liegenden Endes des Treibeinsatzes (24, 124) sich radial erstreckend angeordnet ist bzw. sind.

4. Plastikrad nach Anspruch 3 mit an der Innenseite (20, 120) des Nabenteils (12, 120) vorgesehenen Verbindungsgliedern (14, 114) und mit an der Außenseite (22, 122) des Nabenteils (12, 120) vorgesehenenverbindungsgliedern (14, 114), die zueinander versetzt angeordnet sind, dadurch gekennzeichnet, daß sich je ein Mitnehmerteil (30, 130) bis in den unteren Bereich der zugehörigen Verbindungsglieder (14, 114) erstreckt.

5. Plastikrad nach einem oder mehreren der vorherigen Ansprüche, dadurch gekennzeichnet, daß die im Bereich der Außenseite (22) des Treibeinsatzes (24) vorgesehenen Mitnehmerteile (32) nach außen abgewinkelt sind.

6. Plastikrad nach einem oder mehreren der vorherigen Ansprüche, dadurch gekennzeichnet, daß der Treibeinsatz (24, 124) mit seinen Mitnehmerteilen (30, 32, 130) aus einem metallischen Werkstoff besteht und beim Gießen des Plastikrades (10,110) mit diesem verbunden wird.

7. Plastikrad nach einem oder mehreren der vorherigen Ansprüche, dadurch gekennzeichnet, daß der Treibeinsatz (24, 124) einen Keil (34, 134) oder eine Nut aufweist und mit einer Nut (38, 138) oder einem Keil an der Antriebsachse (36, 138) in Eingriff bringbar ist.

8. Plastikrad nach einem oder mehreren der vorherigen Ansprüche, dadurch gekennzeichnet, daß der Treibeinsatz (24) zweiteilig ausgebildet ist.

9. Plastikrad nach Anspruch 5, dadurch gekennzeichnet, daß die an der Außenseite (22) vorgesehenen Verbindungsglieder (14) im Bereich der Mitnehmerteile (32) nach innen abgewinkelt sind und in diesem Bereich eine Schutzkappe (42) aufnehmen.

## Claims

1. A plastics drive wheel (10, 110) with radially arranged connecting members (14, 114) between a hub part (12) and a rim part (16), characterized by a drive insert (24, 124) received in the hub part (12) with an opening for endwise reception of a drive axle (36, 136) and with at least one entraining part (30, 32, 130) extending outwards from the drive insert (24, 124) into a connecting member (14, 114).

2. A plastics wheel according to claim 1, characterized in that the drive insert (24, 124) has at least three entraining parts (30, 32, 130) uniformly distributed round its periphery.

3. A plastics wheel according to claim 1 or 2, characterized in that the entraining part or parts (30, 32, 130) is or are arranged extending radially in the region of the end of the drive insert (24, 124) lying inside and/or in the region of the end lying outside.

4. A plastics wheel according to claim 3, with connecting members (14, 114) provided on the inner side (20, 120) of the hub part (12, 112) and connecting members (14, 114) provided on the outer side (22, 122) of the hub part (12, 112), which are arranged offset from one another, characterized in that an entraining part (30, 130) extends into the lower region of each associated connecting member (14, 114).

5. A plastics wheel according to one or more of the preceding claims, characterized in that the entraining parts (32) provided in the region of the outside (22) of the drive insert (24) are inclined outwardly.

6. A plastics wheel according to one or more of the preceding claims, characterized in that the drive insert (24, 124) with its entraining parts (30, 32, 130) consists of a metallic material and is connected to the plastics wheel (10, 110) in the casting thereof.

7. A plastics wheel according to one or more of the preceding claims, characterized in that the drive insert (24, 124) has a key (34, 134) or a groove and can be engaged with a groove (38, 138) or key on the drive axle (36, 136).

8. A plastics wheel according to one or more of the preceding claims, characterized in that the drive insert (24) is formed in two parts.

9. A plastics wheel according to claim 5, characterized in that the connecting members (14) provided on the outside (22) are inclined inwardly in the region of the entraining parts (32) and receive a protective cap (42) in this region.

## Revendications

1. Roue en matière plastique (10,110) pouvant être entraînée, comportant des organes de liaison (14,114) disposés radialement entre une partie formant moyeu (12) et une partie formant jante (16), caractérisée par un insert d'entraînement (24;124) logé dans la partie formant moyeu (12) et comportant une ouverture servant à loger, au niveau de l'extrémité, un axe d'entraînement (36,136) et au moins un élément d'entraînement (30,32,130), qui s'étend vers l'extérieur à partir de l'insert d'entraînement (24,124), dans un organe de liaison (14,114).

2. Roue en matière plastique selon la revendication 1, caractérisée en ce que l'insert d'entraînement (24,124) comporte au moins trois éléments d'entraînement (30,32,130) répartis uniformément sur sa périphérie.

3. Roue en matière plastique selon la revendication 1 ou 2, caractérisée en ce que le ou les éléments d'entraînement (30,32,130) est ou sont disposé(s) de manière à s'étendre radialement dans la zone de l'extrémité intérieure et/ou dans la zone de l'extrémité extérieure de l'insert d'entraînement (24,124).

4. Roue en matière plastique selon la revendication 3, comportant des organes de liaison (14,114), qui sont prévus sur le côté intérieur (20,120) de la partie formant moyeu (12,120), et des organes de liaison (14,114), qui sont prévus sur le côté extérieur (22,122) de la partie formant moyeu (12,120) et sont disposés en étant décalés réciproquement, caractérisée en ce que l'organe d'entraînement respectif (30,130) s'étend jusque dans la partie inférieure des organes de liaison associés (14,114).

5. Roue en matière plastique selon une ou plusieurs des revendications précédentes, caractérisée en ce que les éléments d'entraînement (32), qui sont prévus dans la zone du côté extérieur (22) de l'insert d'entraînement (24), sont coudés vers l'extérieur.

6. Roue en matière plastique selon une ou plusieurs des revendications précédentes, caractérisée en ce que l'insert d'entraînement (24,124) est réalisé, ainsi que ses éléments d'entraînement (30,32,130), en un matériau métallique et, lors de la coulée de la roue en matière plastique (10,110), est relié à cette dernière.

7. Roue en matière plastique selon une ou plusieurs des revendications précédentes, caractérisée en ce que l'insert d'entraînement (24,124) comporte une clavette (34,134) ou une rainure et peut être amené à engrener avec une rainure (38,138) ou une clavette située sur l'axe d'entraînement (36,138).

8. Roue en matière plastique selon une ou plusieurs des revendications précédentes, caractérisée en ce que l'insert d'entraînement (24) est agencé sous la forme de deux éléments.

9. Roue en matière plastique selon la revendication 5, caractérisée en ce que des organes de liaison (14) prévus sur la face extérieure (22) sont coudés vers l'intérieur dans la zone des éléments d'entraînement (32) et reçoivent, dans cette zone, un capuchon de protection (42).
